# DEMANDE DE BREVET EUROPEEN

(11) **EP 2 404 725 A1**
(43) Date de publication de la demande: **11.01.2012**
(21) Numéro de dépôt: 10168806.7
(22) Date de dépôt: 08.07.2010
(51) Int. Cl.: B29C 33/04, B29C 33/30, B29C 33/38, B29C 33/56, B29C 43/36

(54) **Moule comportant au moins un insert amovible pour le moulage par injection, compression, insert amovible equipant le moule et procede de fabrication et de modification du moule**

(71) Demandeur: ARRK Tooling Sermo France, 49280 La Seguiniere (FR)
(72) Inventeur: Rayer, Michaël, 49280 La Seguiniere (FR); Boutin, Robert, 49280 La Seguiniere (FR); Tronel, Michel, 49280 La Seguiniere (FR)
(74) Mandataire: Chaillot, Geneviève

(57) **Abrégé**

Moule (101) de compression, d'injection ou pour une technique de moulage similaire, comprenant une matrice dont une face présente une forme moulante et dont l'autre face porte des moyens de fixation à un plateau de presse, un noyau dont une face présente la forme moulante complémentaire de la forme moulante présentée par la matrice et dont l'autre face porte des moyens de fixation à un plateau de presse opposé, et un dispositif d'éjection de la pièce moulée (109) constitué par une plaque d'éjection (111) et au moins un éjecteur (112) traversant le noyau, caractérisé par le fait qu'au moins l'un parmi la matrice et le noyau est constitué par l'assemblage démontable d'une coque (107, 120) présentant la forme moulante associée et définissant, sur sa face (107b, 120b) opposée à la face (107a, 120a) présentant la forme moulante, une cavité apte à être fermée par une plaque (105, 119), d'une plaque (105, 119) apte à fermer la cavité, et d'un insert amovible (110, 122) supporté par la plaque (105, 119) et agencé pour remplir la cavité pour absorber les efforts de compression et de traction créés lors du moulage, le ou les éjecteurs (112) traversant à la fois la plaque de noyau (105), l'insert amovible de noyau (110) et la coque de noyau (107).

## Description

La présente invention porte sur des moules pour le moulage par injection, compression ou par des techniques similaires, de pièces en matière thermoplastique ou en matière plastique composite, en particulier en matière thermodurcie, ces pièces étant aussi bien des pièces de structure que des pièces de forme.

Par l'expression « techniques similaires », on entend notamment le moulage par transfert de résine et le moulage par injection-compression.

Les pièces moulées que l'on peut fabriquer avec les moules selon la présente invention sont très variées, appartenant à des secteurs industriels tels que l'industrie automobile, le secteur ferroviaire, la construction aéronautique et l'aérospatiale, la construction navale, l'industrie électrique, le domaine sanitaire, le mobilier, le bâtiment, les loisirs et les sports.

On peut citer, entre autres, dans le domaine automobile : les panneaux de portières, panneaux latéraux, panneaux de carrosserie, ailes, toits amovibles, hayons, panneaux de toiture, capots, rétroviseurs latéraux, assises et supports de sièges, contre-portes de voiture, dossiers de sièges, tablettes arrière, pare-chocs, amortisseurs, jantes ; dans le domaine du bâtiment : panneaux de protection et d'isolation, bardeaux, plaques translucides planes ou ondulées, les éléments de salles de bain, tels que baignoires, lavabos, douches, éviers.

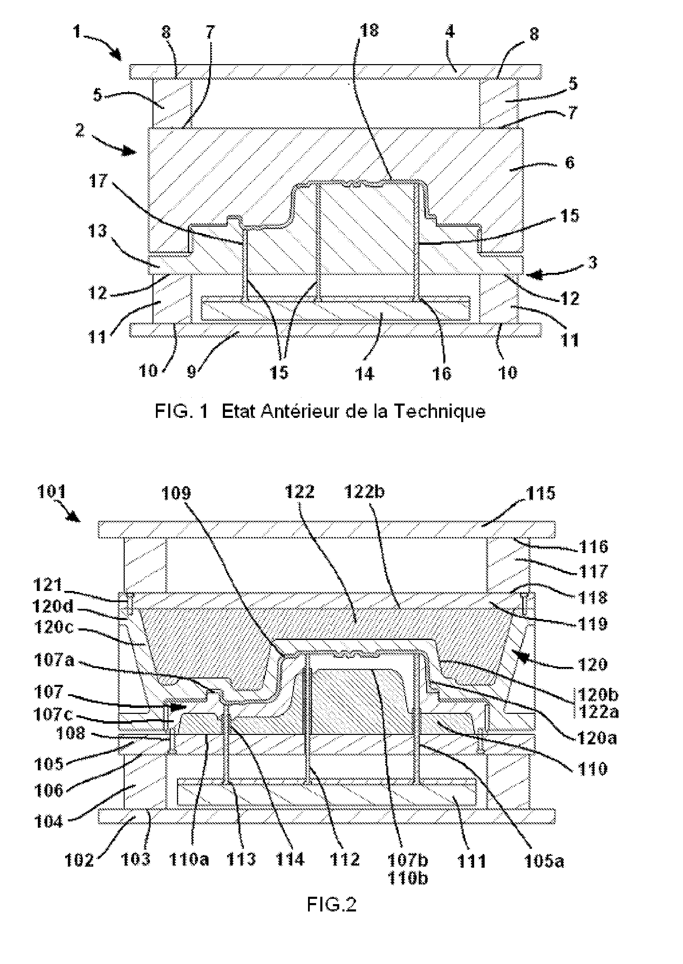

Les moules d'injection, de compression ou de technique similaire destinés à la fabrication de ces pièces qui sont conçus en technologie traditionnelle sont des moules métalliques réalisés à partir de blocs en acier coulé massif. On va maintenant décrire plus en détail, avec référence à la Figure 1, un moule traditionnel réalisé à partir de blocs d'acier et décrire les inconvénients d'un tel moule.

Le moule 1, représenté en position fermée sur la Figure 1, comporte un ensemble matrice 2 présentant une forme moulante et un ensemble noyau 3 présentant la forme moulante complémentaire de la forme moulante présentée par l'ensemble matrice 2. On va maintenant décrire les ensembles 2 et 3 en faisant référence à leur position représentée sur la Figure 1, à savoir pour un assemblage et un déplacement du moule selon un axe vertical.

L'ensemble matrice 2 comprend, de haut en bas si l'on regarde la Figure 1 : une semelle 4, des tasseaux 5 et une matrice 6. La matrice 6 est un monobloc d'acier usiné ayant la forme générale d'un parallélépipède rectangle, usiné en creux sur sa grande face inférieure pour constituer une forme moulante correspondant à la partie bombée de la pièce à mouler - une pièce pour coffre arrière avec logement pour roue de secours dans l'exemple représenté. La matrice 6 est assemblée en 7 aux tasseaux 5, au nombre de quatre, eux-mêmes assemblés en 8 à la semelle 4.

La semelle 4 présente des moyens (non représentés) permettant de la fixer, par exemple par vissage, à un plateau de presse, qui est le plateau mobile dans le cas d'un moule à déplacement vertical comme représenté sur la Figure 1, mais qui serait le plateau fixe de la presse dans le cas d'un moule à déplacement horizontal. Ces moyens de fixation ne seront pas décrits plus en détail car ils sont bien connus des moulistes.

L'ensemble noyau 3 comprend, de bas en haut si l'on regarde la Figure 1 : une semelle 9 assemblée en 10 à des tasseaux 11, eux-mêmes assemblés en 12 à un noyau 13.

La semelle 9 a la forme générale d'une plaque rectangulaire. Elle présente des moyens de fixation, par exemple par vissage, au plateau de presse fixe dans le cas d'un moule à déplacement vertical, ou au plateau de presse mobile dans le cas d'un moule à déplacement horizontal.

Les tasseaux 11, au nombre de quatre, sont assemblés aux quatre coins de façon à délimiter, entre la face inférieure du noyau 13 et la face supérieure de la semelle 9, un espace vide ou cage d'éjection, constituant un passage mécanique dans lequel se déplace une plaque d'éjection 14, entre une position où elle vient en appui sur la face supérieure de la semelle 9 et une position d'éjection comme cela sera décrit ci-après.

La plaque d'éjection 14 porte des éjecteurs 15 assemblés à celle-ci en 16.

Le noyau 13 est également constitué par un bloc en acier massif dont la face inférieure est destinée à être assemblée aux faces supérieures des tasseaux 11 et dont la face supérieure est configurée pour porter la forme moulante complémentaire de la forme moulante présentée par la matrice 6. Les éjecteurs 15, disposés verticalement dans l'exemple représenté, traversent le noyau 13 à travers des ouvertures 17 prévues pour le passage libre des éjecteurs 15.

A l'ouverture du moule 1, la plaque d'éjection 14 est actionnée pour se soulever et permettre l'éjection de la pièce moulée 18 de façon connue en soi.

Les moules en acier, tels que celui qui vient d'être décrit, présentent un poids très important, un gros moule de pare-chocs réalisé avec ces technologies traditionnelles présentant un poids de l'ordre de 30 tonnes. Ils sont réalisés à partir de blocs d'acier de très grandes dimensions, lesquels doivent être soumis à des phases d'usinage - usinage grossier puis usinage de finition - pour former sur l'une des faces la forme moulante, ces phases d'usinage enlevant de la matière qui est définitivement perdue.

En particulier, le bloc d'acier constituant le noyau doit également être soumis à des phases d'usinage afin d'intégrer la fonction d'éjection de la pièce moulée, assurée par les éjecteurs 15 portés par la plaque d'éjection 14, cette intégration consistant en la réalisation des ouvertures 17.

Ces phases d'usinage sont compliquées et coûteuses en termes de main-d'oeuvre et d'outil, augmentant de ce fait le coût de fabrication du moule.

Le poids important des blocs constituant le moule, nécessaire pour en garantir les caractéristiques mécaniques, rend leur manipulation difficile et leur transport malaisé et coûteux.

En outre, l'acier étant acheté au poids, la fabrication du moule est d'autant plus coûteuse que le poids des blocs constituant le moule est important. Les pièces à mouler étant dans certains cas de très grandes dimensions et les blocs d'acier constituant le moule étant de dimensions correspondantes, la fabrication du moule peut dans certains cas devenir trop coûteuse par rapport à la pièce à mouler.

De plus, dans l'opération de moulage, les masses en mouvement sont importantes, avec, pour conséquence des efforts importants appliqués à la presse, réduisant par là la durée de vie de cette dernière.

La Société déposante a recherché une solution à ces différents problèmes provenant du poids, des dimensions importantes et de la complexité d'usinage des blocs composant les moules et a découvert qu'il était possible de les résoudre en remplaçant les blocs d'acier utilisés depuis toujours par un ensemble comprenant une coque, une plaque et un insert amovible de poids plus léger que l'acier, notamment à base non métallique, notamment en un produit coulé et durci en venant remplir l'espace formé entre la coque et la plaque dans des conditions où il restera amovible.

Il n'était pas évident de réaliser de tels ensembles démontables dans ce domaine des moules d'injection et de compression pour lesquels des efforts extrêmement importants doivent être absorbés, appelant donc naturellement l'emploi de blocs massifs d'acier ou de blocs assemblés définitivement, comme c'est le cas du moule selon le brevet français n° 2 660 236.

En effet, conformément à ce brevet, au moins un demi-moule du moule décrit comporte un cadre métallique qui entoure une masse de béton pourvue d'un revêtement métallique délimitant la cavité de moulage, ledit demi-moule comprenant au moins un organe d'accrochage dont une partie est noyée dans le béton et dont le reste est noyé dans le revêtement métallique, lequel est appliqué par métallisation (projection plasma) sur un modèle positif en résine.

Un tel ensemble démontable coque - plaque - insert amovible venant remplacer les blocs massifs, la diminution de la quantité de métal utilisée réduit d'autant l'énergie utilisée pour l'élaboration de ces matériaux et le coût de fabrication du moule. Le bilan carbone est amélioré. De plus, les matériaux utilisés pour réaliser l'insert sont beaucoup moins coûteux que l'acier constituant traditionnellement les blocs massifs. L'insert est avantageusement choisi en un matériau mis en place par coulée et durcissement in situ qui participe à la résistance mécanique de l'ensemble, améliorant même celle-ci aussi bien à la compression qu'à la traction.

Etant mis en place par coulée, donc sans nécessiter d'usinage spécifique, le matériau de l'insert autorise l'intégration des fonctions mécaniques telles que manutentions et éjection. De conductibilité largement inférieure à celle de l'acier, il participe à l'isolation thermique du moule.

La réduction du poids final du moule a un fort impact favorable sur le transport, le facilitant et en diminuant le coût. De plus, les pièces individuelles étant moins encombrantes, les volumes à transporter sont moindres. Il a ainsi pu être observé que cette technologie permet d'abaisser entre 20 et 30 % le poids d'un moule traditionnel.

Le poids du moule étant abaissé, les masses du moule en mouvement lors du moulage sont réduites, ce qui permet de moins solliciter la presse et donc d'allonger sa durée de vie.

D'autres avantages importants de l'invention sont que la fabrication des moules selon l'invention demande moins de temps que l'usinage de blocs massifs et que les modifications et évolutions des moules, par exemple si une pièce à mouler doit subir des modifications ou évolutions de forme, sont facilitées. L'utilisation d'une coque est alors un avantage important, car il n'est alors plus nécessaire de manipuler de gros blocs d'acier. Ainsi, lorsqu'il est nécessaire de modifier la coque pour lui ajouter un creux moulant, il suffit de réaliser ce creux sur la face de la coque présentant la forme moulante, de rapporter un pavé de même matériau que la coque à l'opposé de ce creux, de façon à conserver la résistance mécanique de la coque, et de réaliser un creux correspondant dans l'insert amovible. Le fait que l'insert ne soit pas réalisé en métal permet de simplifier les étapes d'usinage imposées par des modifications de la pièce à mouler, et donc de diminuer leur coût.

Ainsi, alors que, dans l'état antérieur de la technique, on part de gros blocs d'acier obtenus par coulée que l'on usine ensuite, la fabrication du moule selon l'invention est plus facile à effectuer car elle consiste en l'usinage de coques de moindre encombrement chacune, plus faciles à manipuler, puis la réalisation aisée d'inserts amovibles par coulée et durcissement in situ. En particulier, les blocs d'acier doivent être commandés auprès d'usines souvent éloignées de l'endroit où sont fabriqués les moules.

L'autre avantage complémentaire, non négligeable, est qu'en cas de modifications importantes de la pièce à mouler, seule la coque, et éventuellement l'insert, doit être changée, ce qui présente un coût beaucoup plus faible que dans le cas des moules traditionnels qui ne peuvent pas être réutilisés et pour lesquels la construction d'un nouveau moule est nécessaire.

La présente invention a donc pour objet un moule de compression, d'injection ou pour une technique de moulage similaire, comprenant une matrice dont une face présente une forme moulante et dont l'autre face porte des moyens de fixation à un plateau de presse, un noyau dont une face présente la forme moulante complémentaire de la forme moulante présentée par la matrice et dont l'autre face porte des moyens de fixation à un plateau de presse opposé, et un dispositif d'éjection de la pièce moulée constitué par une plaque d'éjection et au moins un éjecteur traversant le noyau, caractérisé par le fait qu'au moins l'un parmi la matrice et le noyau est constitué par l'assemblage démontable d'une coque présentant la forme moulante associée et définissant, sur sa face opposée à la face présentant la forme moulante, une cavité apte à être fermée par une plaque, d'une plaque apte à fermer la cavité, et d'un insert amovible supporté par la plaque et agencé pour remplir la cavité pour absorber les efforts de compression et de traction créés lors du moulage, le ou les éjecteurs traversant à la fois la plaque de noyau, l'insert amovible de noyau et la coque de noyau.

La ou chaque coque est avantageusement réalisée en un matériau de résistance suffisante pour satisfaire aux exigences de moulage de la pièce à mouler. En particulier, la coque peut ainsi être en acier ou fonte.

Conformément à un mode de réalisation particulier de l'invention, les faces présentant les formes moulantes sont de forme complémentaire, assurant la fermeture étanche de l'empreinte formée par les deux formes moulantes, et les coques portent, à leur périphérie, des jupes pour former la cavité recevant l'insert amovible.

La coque peut être obtenue par fonderie, usinage, projection métallique, stéréolithographie ou frittage.

L'insert amovible est avantageusement réalisé en un matériau de résistance suffisante pour supporter les efforts de compression et de traction créés lors de l'opération de moulage. L'insert amovible peut être réalisé par coulée d'un béton, tel qu'un béton fibré haute performance ou ultra-haute performance, ou encore un béton polymère.

Le béton fibré haute performance ou ultra-haute performance (BFUP) est obtenu par malaxage avec l'eau d'un mélange cimentaire et granulaire ayant des compositions granulaires spécifiques (diamètre maximal réduit), d'adjuvants superplastifiants et de fibres, telles que des fibres métalliques (acier), de carbone, de verre, de matière synthétique. La coulée ou gâche obtenue est versée dans une coque selon l'invention dans les conditions décrites ci-après. Le béton fibré haute performance ou ultra-haute performance présente ainsi les avantages d'une très grande ouvrabilité, d'une déformabilité sans rupture fragile et d'une résistance à la microfissuration qui sont meilleures que celles d'un béton classique. Sa résistance en flexion peut aller jusqu'à 45 MPa et sa résistance à la compression, jusqu'à 200 MPa.

Le béton polymère est constitué par le mélange d'une résine et d'agrégats auquel viennent s'ajouter des adjuvants tels qu'un débullant pour éliminer les bulles qui peuvent fragiliser le béton, un agent de couplage pour améliorer l'adhérence résine/agrégats, un durcisseur et un accélérateur de durcissement pour accélérer le durcissement de la résine. Au moins le durcisseur est ajouté au moment de l'emploi. La résine est notamment choisie parmi les résines époxy, les résines polyesters isophtaliques et polyesters orthophtaliques, les résines acryliques et les résines vinylester. On peut notamment citer une résine époxy avec un durcisseur, une résine polyester insaturée isophtalique, une résine polyester insaturée orthophtalique avec un adjuvant dit « low profile ». Les agrégats sont, de préférence, de nature alluvionnaire, choisis notamment parmi les sables de quartz, le basalte, le granit, le feldspath, le mica et le spath.

Conformément à un mode de réalisation particulier de l'invention, le moule tel que défini ci-dessus est destiné à un moulage par injection et comprend en outre un dispositif d'injection de matière de moulage dans l'empreinte, passant à travers des orifices pratiqués respectivement dans la plaque de matrice, l'insert amovible de matrice et la coque de matrice.

La présente invention a également pour objet un insert destiné à équiper un moule tel que défini ci-dessus, caractérisée par le fait qu'il est apte à remplir la cavité formée par la face opposée à la face présentant la forme moulante de la coque et qu'il est apte à être retiré de celle-ci et à être replacé dans celle-ci.

La présente invention a également pour objet un procédé de fabrication d'un moule tel que défini ci-dessus, caractérisé par le fait que l'on définit les formes moulantes de matrice et de noyau, que l'on réalise au moins une coque présentant la forme moulante associée et définissant, sur sa face opposée à la face présentant la forme moulante, une cavité apte à être fermée par une plaque, que l'on réalise un insert amovible associé tel que défini ci-dessus, que l'on introduit l'insert amovible dans ladite cavité et que l'on fixe une plaque à la coque associée de façon à fermer la cavité avec l'insert amovible placé dans celle-ci.

Selon un mode de réalisation particulier du procédé de fabrication du moule, pour réaliser l'insert amovible associé à la cavité, on dispose un moyen de démoulage, tel qu'un agent démoulant appliqué notamment par projection, sur la face opposée à la face présentant la forme moulante de la coque, on coule dans la cavité le matériau destiné à former l'insert amovible de telle sorte qu'il remplisse la cavité, et on laisse ledit matériau durcir dans la cavité.

Lorsque l'insert amovible est destiné à être associé à la coque de noyau, on dispose, afin de réaliser les orifices traversants destinés à laisser passer les éjecteurs et avant de couler le matériau formant l'insert, des tubes en acier ou en matière plastique de telle sorte que leur âme soit alignée avec les orifices pratiqués dans la plaque de noyau et la coque de noyau lorsque la plaque de noyau, l'insert amovible de noyau et la coque de noyau sont assemblés. Ainsi, lors de la coulée du matériau formant l'insert, ce matériau remplit l'espace libre formé par la cavité et les surfaces externes des tubes.

Lorsque le moule est destiné à un moulage par injection, on obtient de façon analogue, dans l'insert amovible de matrice, un orifice traversant destiné à recevoir un tube en acier ou matière plastique laissant passer le dispositif d'injection de matière.

La présente invention a également pour objet un procédé de modification de la forme moulante de matrice ou de noyau d'un moule tel que défini ci-dessus, caractérisé par le fait que l'on détache la plaque de la ou de chaque coque, que l'on retire l'insert de la cavité de la ou de chaque coque, que l'on modifie, notamment par usinage, la forme de la ou de chaque coque, que l'on modifie en conséquence l'insert amovible ou que l'on réalise un nouvel insert amovible correspondant à la forme interne modifiée de la ou de chaque coque, que l'on place le ou chaque insert amovible modifié dans la cavité modifiée de la ou de chaque coque modifiée, et que l'on fixe la ou chaque plaque à la ou à chaque coque modifiée.

Le fait que l'insert amovible soit réalisé en un matériau à base non métallique, notamment en béton fibré haute performance ou ultra haute-performance ou en béton polymère, permet de le modifier très facilement et à un coût relativement faible.

Pour mieux illustrer l'objet de la présente invention, on va en décrire ci-après un mode de réalisation particulier avec référence au dessin annexé.

Sur ce dessin,
- la Figure 1 est une vue schématique d'un moule d'injection, de compression ou similaire fabriqué par usinage de blocs d'acier conformément à l'état antérieur de la technique, le moule étant représenté dans sa position fermée ;
- la Figure 2 est une vue analogue à la Figure 1 d'un moule comportant une matrice et un noyau réalisés conformément à la présente invention, le moule étant représenté dans sa position fermée ;
- la Figure 3 est une vue en perspective éclatée de la coque de noyau et de l'insert de noyau du moule représenté sur la Figure 2, la coque et l'insert étant vus de dessous de façon à représenter la face opposée à la face présentant la forme moulante de la coque de noyau et la face inférieure de l'insert de noyau ; et
- la Figure 4 est une vue en perspective éclatée de la coque de noyau et de l'insert de noyau du moule représenté sur la Figure 2, la coque et l'insert étant vus de dessus de façon à représenter la face présentant la forme moulante de la coque de noyau et la face de l'insert amovible complémentaire de la coque de noyau.

Si l'on se réfère aux Figures 2 à 4, on peut voir que le moule 101 de compression, d'injection ou pour une technique similaire, selon la présente invention comprend à sa base, de façon analogue aux moules traditionnels décrits ci-dessus, une semelle 102 sur laquelle sont assemblés en 103 des tasseaux 104.

La semelle 102 a la forme générale d'une plaque rectangulaire. Les tasseaux 104 sont disposés à chaque coin de la semelle 102 et ont la même hauteur.

Les tasseaux 104 supportent sur leur face supérieure une plaque 105 de forme généralement rectangulaire, dont la face inférieure est assemblée en 106 aux tasseaux 104.

Une coque 107 est rendue solidaire de la plaque 105 par des vis 108 et sert de noyau proprement dit du moule 101. Elle présente ainsi sur sa face supérieure 107a la forme moulante adaptée à la pièce à mouler 109. La face inférieure 107b de la coque de noyau 107 a sensiblement la même forme que la face supérieure 107a, de telle sorte que l'épaisseur de la coque est globalement constante.

La forme de la coque de noyau 107 est telle que la face inférieure 107b forme une cavité fermée par la plaque 105, cette cavité recevant un insert 110. Ainsi, la coque de noyau 107 présente une petite jupe 107c délimitant la périphérie de la cavité. La coque de noyau 107 est fixée à la plaque 105 par l'intermédiaire de cette petite jupe 107c.

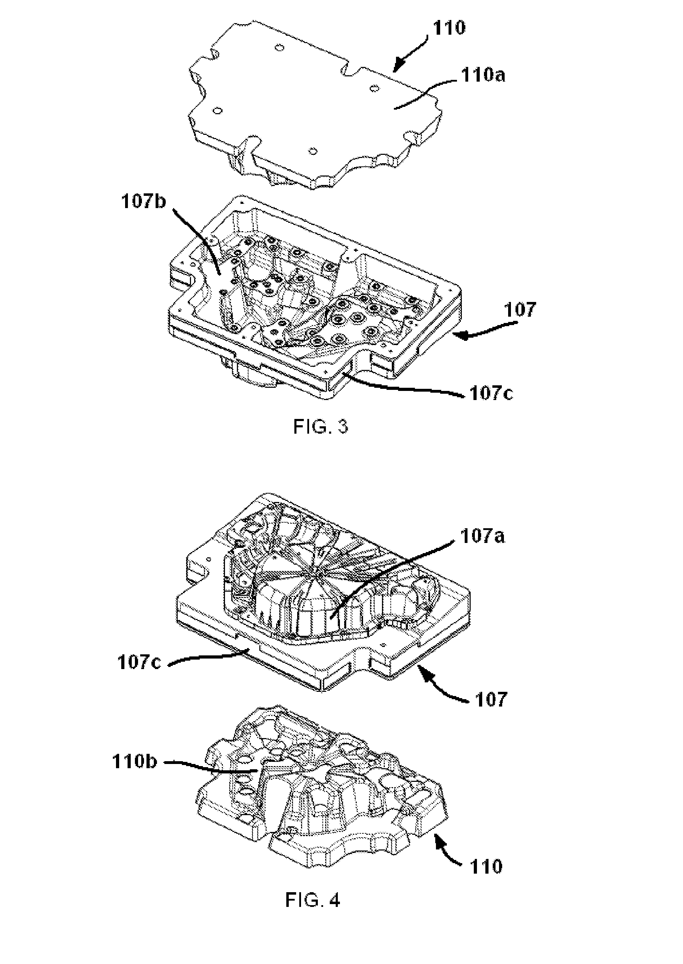

L'insert 110 remplit totalement la cavité formée par la face inférieure 107b de la coque de noyau 107 et est apte à être retiré de celle-ci et à être replacé dans celle-ci selon les besoins. L'insert 110 présente ainsi une face inférieure 110a reposant sur la face supérieure de la plaque 105 et une face supérieure 110b complémentaire de la face inférieure 107b de la coque de noyau 107, comme on peut le voir sur la Figure 4. Dans ce mode de réalisation, l'insert 110 est réalisé en béton fibré ultra haute performance.

Après que la coque de noyau 107 a été fixée par vissage à la plaque 105, l'ensemble formé par la plaque 105, l'insert amovible 110 et la coque de noyau 107 se comporte comme un ensemble rigide monobloc.

On voit donc que le noyau 13 des moules traditionnels décrits ci-dessus a été remplacé par la plaque 105, l'insert amovible 110 et la coque de noyau 107. La résistance mécanique aux efforts de compression et de traction créés lors du moulage, auparavant fournie par le bloc d'acier constituant le noyau, est maintenant assurée par l'insert amovible 110 supportant la coque de noyau 107 dont le matériau a une résistance suffisante pour satisfaire aux exigences de moulage de la pièce à mouler 109.

Afin d'intégrer la fonction d'éjection de la pièce moulée 109, une plaque d'éjection 111 est placée dans l'espace vide ou cage d'éjection formé entre la face supérieure de la semelle 102 et la face inférieure de la plaque 105. Cet espace vide constitue un passage mécanique dans lequel se déplace la plaque d'éjection 111, entre une position où elle vient en appui sur la face supérieure de la semelle 102 et une position d'éjection de la pièce moulée 109.

La plaque d'éjection 111 porte des éjecteurs 112 assemblés à celle-ci en 113. Des orifices traversants 105a sont pratiqués dans la plaque 105 pour le passage libre des éjecteurs 112.

Afin de permettre le passage des éjecteurs 112 à travers l'insert amovible 110, sont pratiqués dans ce dernier des orifices traversants dans lesquels sont reçus des tubes en acier ou en matière plastique 114. Les éjecteurs 112 passent ainsi à travers ces tubes 114. Des orifices traversants sont également pratiqués dans la coque 107 dans la continuité des précédents afin de permettre le passage libre des éjecteurs 112.

A l'ouverture du moule 101, la plaque d'éjection 111 est actionnée pour se soulever et permettre l'éjection de la pièce moulée 109 de façon connue en soi.

Si l'on se réfère encore à la Figure 2, on peut voir qu'à sa partie supérieure, le moule 101 comprend, comme le moule traditionnel décrit ci-dessus, une semelle 115 de forme généralement rectangulaire et présentant des moyens de fixation (non représentés) à un plateau de presse.

La face inférieure de la semelle 115 est assemblée en 116 à la face supérieure de tasseaux 117. Les tasseaux 117 sont disposés aux quatre coins de la semelle 115 et ont la même hauteur.

La face inférieure des tasseaux 117 est assemblée en 118 à la face supérieure d'une plaque 119 généralement rectangulaire.

De façon analogue au noyau du moule 101 selon la présente invention, une coque 120 est rendue solidaire de la plaque 119 par des vis 121.

La coque 120 sert de matrice proprement dite du moule 101. Elle présente ainsi sur sa face inférieure 120a la forme moulante complémentaire de la forme moulante présentée par la face supérieure 107a de la coque de noyau 107. La face supérieure 120b de la coque de matrice 120 a sensiblement la même forme que la face inférieure 120a, de telle sorte que l'épaisseur de la coque est globalement constante.

La forme de la coque de matrice 120 est telle que la face supérieure 120b forme une cavité fermée par la plaque 119, cette cavité recevant un insert amovible 122. Ainsi, dans l'exemple représenté sur la Figure 2, la coque de matrice 120 présente une jupe 120c se terminant en une collerette périphérique 120d par l'intermédiaire de laquelle la coque de matrice 120 est reliée à la plaque 119 par les vis 121.

L'insert 122 remplit totalement la cavité formée par la face supérieure 120b de la coque de matrice 120 et est apte à être retiré de celle-ci et replacé dans celle-ci selon les besoins. L'insert 122 présente ainsi une face supérieure 122b sur laquelle s'appuie la face inférieure de la plaque 119 et une face inférieure 122a complémentaire de la face supérieure 120b de la coque de matrice 120. Dans ce mode de réalisation, l'insert 120 est également réalisé en béton fibré ultra haute performance.

Après que la coque de matrice 120 a été fixée par vissage à la plaque 119, l'ensemble formé par la plaque 119, l'insert amovible 122 et la coque de matrice 120 se comporte comme un ensemble rigide monobloc.

On voit donc que la matrice 6 des moules traditionnels décrits ci-dessus a été remplacée par la plaque 119, l'insert amovible 122 et la coque de matrice 120. La résistance mécanique aux efforts de compression et de traction créés lors du moulage, auparavant fournie par le bloc d'acier constituant la matrice, est maintenant assurée par l'insert amovible 122 en contact avec la coque de matrice 120 dont le matériau a une résistance suffisante pour satisfaire aux exigences de moulage de la pièce à mouler 109.

Si le moule 101 est destiné à un moulage par injection, des orifices traversants sont respectivement pratiqués dans la plaque 119 et la coque de matrice 120 afin de permettre le passage d'un dispositif d'injection de matière, et l'insert de matrice 122 présente un orifice traversant recevant un tube en acier ou en matière plastique à travers lequel peut passer le dispositif d'injection de matière.

Lorsque le moule 101 est dans sa position fermée, les formes moulantes présentées par la coque de noyau 109 et la coque de matrice 120 forment une empreinte dans laquelle est formée la pièce à mouler 109. On peut voir que la forme de la face supérieure 107a de la coque de noyau 107 et que la forme de face inférieure 120a de la coque de matrice 120 sont complémentaires sur l'extérieur de l'empreinte de façon à fermer celle-ci de façon étanche, une partie de la face inférieure 120a venant s'adapter autour de la face externe de la jupe 107c.

Ainsi, lorsque l'on souhaite fabriquer une pièce en matière plastique à l'aide du moule 101, on injecte dans l'empreinte, une fois le moule 101 fermé, de la matière préplastifiée et dosée en conduisant généralement une injection sous une première pression, un dégazage, puis une fin d'injection sous une deuxième pression. Après un laps de temps, on ouvre le moule 101 et on éjecte la pièce moulée 109, puis on referme le moule, le cycle de moulage pouvant alors recommencer.

On voit donc que l'on a constitué un moule de compression, d'injection ou pour technique de moulage similaire, dans lequel les blocs d'acier formant la matrice et le noyau ont chacun été remplacés par un ensemble plaque - insert amovible - coque, permettant de diminuer fortement la quantité d'acier utilisé, et donc le coût de fabrication du moule.

Il est bien entendu que les modes de réalisation qui ont été décrits ci-dessus ont été donnés à titre indicatif et non limitatif et que des modifications peuvent être apportées sans que l'on s'écarte pour autant du cadre de la présente invention.

## Revendications

1. Moule (101) de compression, d'injection ou pour une technique de moulage similaire, comprenant une matrice dont une face présente une forme moulante et dont l'autre face porte des moyens de fixation à un plateau de presse, un noyau dont une face présente la forme moulante complémentaire de la forme moulante présentée par la matrice et dont l'autre face porte des moyens de fixation à un plateau de presse opposé, et un dispositif d'éjection de la pièce moulée (109) constitué par une plaque d'éjection (111) et au moins un éjecteur (112) traversant le noyau, **caractérisé par le fait qu'**au moins l'un parmi la matrice et le noyau est constitué par l'assemblage démontable d'une coque (107, 120) présentant la forme moulante associée et définissant, sur sa face (107b, 120b) opposée à la face (107a, 120a) présentant la forme moulante, une cavité apte à être fermée par une plaque (105, 119), d'une plaque (105, 119) apte à fermer la cavité, et d'un insert amovible (110, 122) supporté par la plaque (105, 119) et agencé pour remplir la cavité pour absorber les efforts de compression et de traction créés lors du moulage, le ou les éjecteurs (112) traversant à la fois la plaque de noyau (105), l'insert amovible de noyau (110) et la coque de noyau (107).

2. Moule selon la revendication 1, **caractérisé par le fait que** la ou chaque coque (107, 120) est réalisée en un matériau de résistance suffisante pour satisfaire aux exigences de moulage de la pièce à mouler.

3. Moule selon la revendication 2, **caractérisé par le fait que** la coque (107, 120) est en acier ou fonte.

4. Moule selon l'une des revendications 1 à 3, **caractérisé par le fait que** les faces (107a, 120a) des coques présentant les formes moulantes sont de forme complémentaire, assurant la fermeture étanche de l'empreinte formée par les deux formes moulantes, et que les coques portent, à leur périphérie, des jupes (107c, 120c) pour former la cavité recevant l'insert amovible (122).

5. Moule selon l'une des revendications 1 à 4, **caractérisée par le fait que** la coque (107, 120) est obtenue par fonderie, usinage, projection métallique, stéréolithographie ou frittage.

6. Moule selon l'une des revendications 1 à 5, **caractérisé par le fait que** l'insert amovible (110, 122) est réalisé en un matériau de résistance suffisante pour supporter les efforts de compression et de traction créés lors de l'opération de moulage.

7. Moule selon la revendication 6, **caractérisé par le fait que** l'insert amovible (110, 122) est réalisé par coulée d'un béton, tel qu'un béton fibré haut performance ou ultra-haute performance, ou un béton polymère.

8. ― Moule selon l'une des revendications 1 à 7, destiné à un moulage par injection, **caractérisé par le fait qu'**il comprend en outre un dispositif d'injection de matière dans l'empreinte, passant à travers des orifices pratiqués respectivement dans la plaque de matrice (119), l'insert amovible de matrice (122) et la coque de matrice (120).

9. Insert (110, 122) destiné à équiper un moule tel que défini à l'une quelconque des revendications 1 à 7, **caractérisé par le fait qu'**il est apte à remplir la cavité formée par la face (107b, 120b) opposée à la face (107a, 120a) présentant la forme moulante de la coque (107, 120) et qu'il est apte à être retiré de celle-ci et à être replacé dans celle-ci.

10. Insert (110, 122) selon la revendication 9, **caractérisé par le fait qu'**il est réalisé en un matériau de résistance suffisante pour supporter les efforts de compression et de traction créés lors de l'opération de moulage, étant notamment obtenu par coulée d'un béton, tel qu'un béton fibré haut performance ou ultra-haute performance, ou un béton polymère.

11. Procédé de fabrication d'un moule tel que défini à l'une quelconque des revendications 1 à 8, **caractérisé par le fait que** l'on définit les formes moulantes de matrice et de noyau, que l'on réalise au moins une coque (107, 120) présentant la forme moulante associée et définissant, sur sa face (107b, 120b) opposée à la face (107a, 120a) présentant la forme moulante, une cavité apte à être fermée par une plaque (105, 119), que l'on réalise un insert amovible (110, 122) associé tel que défini à l'une des revendications 9 à 10, que l'on introduit l'insert amovible (110, 122) dans ladite cavité et que l'on fixe une plaque (105, 119) à la coque associée (107, 120) de façon à fermer la cavité avec l'insert amovible (110, 122) placé dans celle-ci.

12. Procédé selon la revendication 11, **caractérisé par le fait que**, pour réaliser l'insert amovible (110, 122) associé à la cavité, l'on dispose un moyen de démoulage, tel qu'un agent démoulant appliqué notamment par projection, sur la face (107b, 120b) opposée à la face (107a, 120a) présentant la forme moulante de la coque (107, 120), que l'on coule dans la cavité le matériau destiné à former l'insert amovible (110, 122) de telle sorte qu'il remplit la cavité, et que l'on laisse ledit matériau durcir dans la cavité.

13. Procédé de modification de la forme moulante de matrice ou de noyau d'un moule tel que défini à l'une quelconque des revendications 1 à 8, **caractérisé par le fait que** l'on détache la plaque (105, 119) de la ou de chaque coque (107, 120), que l'on retire l'insert amovible (110, 122) de la cavité de la ou de chaque coque (107, 120), que l'on modifie, notamment par usinage, la forme de la ou de chaque coque (107, 120), que l'on modifie en conséquence l'insert amovible (110, 122) ou que l'on réalise un nouvel insert amovible (110, 122) correspondant à la forme interne modifiée de la ou de chaque coque (107, 120), que l'on place le ou chaque insert amovible modifié (110, 122) dans la cavité modifiée de la ou de chaque coque modifiée (107, 120), et que l'on fixe la ou chaque plaque (105, 119) à la ou à chaque coque modifiée (107, 120).
